# EUROPÄISCHE PATENTSCHRIFT

(11) **EP 2 910 353 B1**
(45) Veröffentlichungstag und Bekanntmachung des Hinweises auf die Patenterteilung: **28.02.2018**
(21) Anmeldenummer: 15153535.8
(22) Anmeldetag: 03.02.2015
(51) Int. Cl.: B27C 5/10, B23Q 11/00, B23C 3/12

(54) **KANTENFRÄSMASCHINE**
EDGE TRIMMING MACHINE
MACHINE A FRAISER LES BORDS

(30) Priorität: 21.02.2014 DE 102014002472
(43) Veröffentlichungstag der Anmeldung: 26.08.2015
(73) Patentinhaber: Festool GmbH, 73240 Wendlingen am Neckar (DE)
(72) Erfinder: Eisenmann, Philipp, 72669 Unterensingen (DE); Reines, Wolfgang, 72655 Altdorf (DE)
(74) Vertreter: Patentanwälte Bregenzer und Reule Partnerschaftsgesellschaft mbB

(56) Entgegenhaltungen:
- EP-A1- 1 563 969
- DE-A1- 4 227 071
- DE-A1-102010 012 023
- DE-U1- 8 609 919
- DE-U1-202007 005 499
- US-A- 3 196 749
- steelone1972: "Festool MFK 700 EQ-SET", , 16. Mai 2010 (2010-05-16), XP054975940, Gefunden im Internet: URL:https://www.youtube.com/watch?v=wp_yv7 p6MII [gefunden am 2015-06-24]

## Beschreibung

Die Erfindung betrifft eine Kantenfräsmaschine zum fräsenden Bearbeitung einer sich zwischen einer Hauptseitenfläche und einer Nebenseitenfläche eines Werkstücks erstreckenden Werkstückkante gemäß dem Oberbegriff des Anspruchs 1.

Eine derartige Kantenfräsmaschine ist im Lieferprogramm der Anmelderin. Diese Kantenfräsmaschine kann freihändig bedient werden, ist also eine manuelle Kantenfräsmaschine und hat eine Absaughaube, in deren Innenraum der Bremskörper angeordnet ist. Der Bremskörper kann gegen die so genannte Tastrolle, die oben und nachfolgend als Stützrolle bezeichnet wird, in einen Bremseingriff gebracht werden, so dass das Drehmoment, das von der Werkzeugwelle auf die Stützrolle einwirkt und diese an sich dreh-antreibt, abgebremst wird. Die solchermaßen abgebremste Stützrolle kann an der sogenannten Nebenseitenfläche entlang gerollt werden und somit die Kantenfräsmaschine bei der Fräsbearbeitung abstützen.

Eine Kantenfräsmaschine der eingangs genannten Art ist auch aus DE 20 2007 105 499 U1 bekannt.

Die bekannte Absaughaube braucht jedoch sehr viel Platz, was in manchen Anwendungsfällen die Handhabung deutlich verschlechtert.

Es ist daher die Aufgabe der vorliegenden Erfindung, die Handhabung bei einer Kantenfräsmaschine der eingangs genannten Art zu verbessern.

Zur Lösung der Aufgabe ist eine Kantenfräsmaschine gemäß Anspruch 1 vorgesehen. Zweckmäßigerweise ist vorgesehen, dass der Bremskörper eine Begrenzungswand zur Begrenzung des Staubführungsraums bildet. Es ist ein Grundgedanke dabei, dass der Bremskörper anders als beim Stand der Technik nicht frei in einem Innenraum der Staubführungseinrichtung angeordnet ist, mithin also einem Luftstrom, der Staub an sich aus dem Bereich des Fräswerkzeugs weg führen soll, im Wege steht, sondern aktiv an der Staubführung beteiligt ist, mithin also den Staubführungsraum seitlich begrenzt. In Zusammenwirkung mit mindestens einer Führungswand oder mehreren Führungswänden der Staubführungseinrichtung begrenzt also der Bremskörper den Staubführungsraum und ermöglicht, dass der Staub effektiv vom Werkzeug weggefördert, z.B. abgesaugt, werden kann.

Es ist ein Aspekt der vorliegenden Erfindung, dass der Staubführungsraum möglichst klein gehalten wird, das heißt dass nicht ein großer, sich neben der Werkzeugaufnahme bzw. dem Fräswerkzeug befindlicher Raum abgesaugt oder jedenfalls von Staub befreit werden muss, sondern ein sehr kleiner Raum nahe bei dem Fräswerkzeug.

Die Begriffe Hauptseitenfläche und Nebenseitenfläche sind weitreichend zu verstehen, d.h. es handelt sich bei diesen Seitenflächen um zueinander winkelige, beispielsweise zueinander rechtwinkelige Seitenflächen des Werkstücks, beispielsweise einer Werkstückplatte. Die Fläche der Nebenseitenfläche kann selbstverständlich größer oder kleiner als diejenige der Hauptseitenfläche sein. Bei der Nebenseitenfläche handelt es sich beispielsweise um eine Schmalseite einer Werkstückplatte, die sich neben einer Oberseite oder einer Unterseite, also der Hauptseitenfläche der Werkstückplatte, erstreckt.

Die Kantenfräsmaschine kann ein eigenes Gebläse zur Förderung von Staubluft aus dem Staubführungsraum aufweisen. Bevorzugt ist es, wenn sie zumindest einen Sauganschluss zum Anschluss eines Saugschlauches aufweist, so dass beispielsweise ein Staubsauger mit seinem Saugschlauch an die Kantenfräsmaschine anschließbar ist.

Die Erfindung bezieht sich vorzugsweise oder ausschließlich auf mobile, manuell freihändig bedienbare Kantenfräsmaschinen.

Bevorzugt ist der mindestens eine Staubeinlass direkt neben der Werkzeugaufnahme.

Es versteht sich, dass mehrere Staubeinlässe möglich sind, d.h. beispielsweise an einander drehwinkelversetzten Bereichen neben der Werkzeugaufnahme. An dieser Stelle sei auch bemerkt, dass selbstverständlich mehrere Staubauslasskanäle möglich sind, d.h. dass der mit Staub beladene Luftstrom nicht unbedingt durch einen einzigen Staubauslasskanal geführt werden muss.

Zwischen der mindestens einen Führungswand der Staubführungseinrichtung und dem Bremskörper befindet sich zweckmäßigerweise mindestens ein Frischlufteinlass zum Zuströmen von frischer Umgebungsluft in den Staubführungsraum hinein. Bevorzugt ist eine Anordnung, bei der sich der Bremskörper sozusagen zwischen zwei seitlichen Führungswänden erstreckt und jeweils zwischen Bremskörper und seitlicher Führungswand ein derartiger Frischlufteinlass vorgesehen ist. Die zuströmseitig einströmende Frischluft wird dann bei der Werkstückbearbeitung sozusagen mit Staub beladen und dann zu dem mindestens einen Staubeinlass des Staubauslasskanals geführt.

Eine an sich eigenständige Erfindung stellt in Zusammenhang mit den oberbegrifflichen Merkmalen des Anspruches 1 eine Kantenfräsmaschine dar, bei der vorgesehen ist, dass ein Staubauslass des Staubauslasskanals eine größere Strömungsquerschnittsfläche oder eine nur um maximal 30 % kleinere Strömungsquerschnittsfläche aufweist als die Summe sämtlicher Strömungsquerschnittflächen, die zum Zuströmen von frischer Umgebungsluft in den Staubführungsraum vorhanden sind, wenn das Werkstück zur Bearbeitung durch das Kantenfräswerkzeug an der Hauptanlagefläche anliegt. Der Grundgedanke ist dabei, dass der Saugstrom im Bereich des Kantenfräswerkzeugs durch die kleinen Strömungsquerschnitte zum Einströmen von Frischluft in den Staubführungsraum, der sozusagen einen Staubabsaugraum darstellt, beschleunigt wird, so dass anfallender Staub mit großer Strömungsgeschwindigkeit abgesaugt wird.

Bevorzugt ist es, wenn sich der mindestens eine Staubeinlass oder jedenfalls ein Staubeinlass, sich ringförmig oder teilringförmig um die Werkzeugaufnahme herum erstreckt. Somit wird direkt vor Ort, nämlich beim Fräswerkzeug, der Staub abgeführt. Ein derartige Staubeinlass kann beispielsweise an dem Führungskörper der Kantenfräsmaschine angeordnet sein, insbesondere in Gestalt einer Durchtrittsöffnung durch den Führungskörper hindurch. Es ist aber auch möglich, dass auf der Seite der Staubführungseinrichtung, beispielsweise an einem blockartigen Führungselement der Staubführungseinrichtung, ein sich ringförmig oder teilringförmig um die Werkzeugaufnahme herum erstreckender Staubeinlass vorgesehen ist.

Bevorzugt ist es, wenn der mindestens eine Staubeinlass einen an der mindestens einen Führungswand der Staubführungseinrichtung angeordneten Staubeinlass umfasst. Es ist es also möglich, dass beispielsweise ein Staubeinlass direkt an der Führungswand angeordnet ist und sich somit der Staubauslasskanal beispielsweise durch die Staubführungseinrichtung hindurch, z.B. durch ein Führungselement der Staubführungseinrichtung hindurch, erstreckt.

Es ist vorgesehen, dass der mindestens eine Staubeinlass einen an dem Führungskörper, beispielsweise der Führungsplatte, der Kantenfräsmaschine angeordneten Staubeinlass umfasst. Es kann also der Staub beispielsweise durch den Führungskörper hindurch abgesaugt werden. Der mindestens eine Staubauslasskanal führt beispielsweise von der Unterseite (an der die Hauptanlagefläche vorgesehen ist) des Führungskörpers zur Oberseite oder zu einer Schmalseite des Führungskörpers. Dies stellt eine an sich eigenständige Erfindung bei einer manuell handhabbaren Kantenfräsmaschine dar. In diesem Fall ist es zwar zweckmäßig, jedoch nicht unbedingt notwendig, dass der Bremskörper sozusagen eine Seitenwand oder Begrenzungswand zur Begrenzung des Staubführungsraums bildet. Es ist auch möglich, dass die Staubführung ausschließlich oder zumindest im Wesentlichen von Führungswänden der Staubführungseinrichtung, die beispielsweise als eine Art Haube ausgestaltet ist, geleistet wird. Mit anderen Worten kann sich beispielsweise vor dem freien Ende der Werkzeugwelle und somit vor dem Bremskörper (z.B. unter- oder oberhalb desselben) eine Führungswand der Staubführungseinrichtung erstrecken.

Die Hauptanlagefläche befindet sich zweckmäßigerweise an der Unterseite des Führungskörpers und ein Staubauslass des Staubauslasskanals an der Oberseite des Führungskörpers. Dies stellt in Verbindung mit den oberbegrifflichen Merkmalen des Anspruches 1 die bereits angedeutete, an sich eigenständige Erfindung dar. Mithin führt also der Staubauslasskanal von der Unterseite zur Oberseite des Führungskörpers, beispielsweise der Führungsplatte. Der Staubauslass, beispielsweise ein Sauganschluss zum Anschließen eines Saugschlauchs, ist also sozusagen bei den schwereren Komponenten der Kantenfräsmaschine, nämlich Antriebsmotor und dergleichen, die ebenfalls an der Oberseite des Führungskörpers angeordnet sind. Mithin ist auch die Bedienung dadurch erleichtert, weil nämlich der Saugschlauch, der am Saugauslass oder Staubauslass anschließbar ist, zur Oberseite der Führungsplatte hin orientiert ist. Unterhalb des Führungskörpers, nämlich dort, wo die Bearbeitung stattfindet, ist der relativ sperrige und unhandliche Saugschlauch dann nicht im Weg. Auch bei dieser Ausgestaltung der Erfindung ist es zwar vorteilhaft, jedoch nicht unbedingt notwendig, dass der Bremskörper eine Seitenwand oder Begrenzungswand zur Begrenzung des Staubführungsraums bildet.

Die Stützrolle oder Tastrolle umfasst beispielsweise ein Kugellager. Die Stützrolle ist bezüglich der Werkzeugwelle drehbar.

Der Bremskörper einerseits und die Werkzeugaufnahme und/oder die Stützrolle andererseits befinden sich zweckmäßigerweise zwischen den Staubführungsraum seitlich begrenzenden Führungswänden der Staubführungseinrichtung. Beispielsweise sind diese Führungswände trichterförmig angeordnet. Die Führungswände können auch gerundet sein, d.h. dass sie sich rund oder kelchartig um die Stützrolle oder die Werkzeugaufnahme herum erstrecken.

Die Hauptanlagefläche und die Werkzeugaufnahme sind vorzugsweise derart positioniert oder relativ zueinander angeordnet, dass das an der Hauptanlagefläche anliegenden Werkstück in Zusammenwirkung mit der mindestens einen Führungswand der Staubführungseinrichtung und dem Bremskörper den Staubführungsraum begrenzt.

Der Bremskörper bildet zweckmäßigerweise eine Bodenwand des Staubführungsraums. Mithin ist also der Bremskörper zweckmäßigerweise sozusagen der stirnseitige Abschluss des Staubführungsraums frontal vor der Werkzeugaufnahme bzw. dem Fräswerkzeug.

Die Staubführungseinrichtung, insbesondere deren Führungselement, weist beispielsweise eine Art Einströmkanal zum einströmen des Saugstroms auf. Zweckmäßig ist dabei vorgesehen, dass der Bremskörper oder ein Vorsprung desselben in den Einströmkanal vorsteht und somit den Strömungsquerschnitt des Einströmkanals verkleinert.

Der Bremskörper bildet bevorzugt bezüglich des freien Endes der Werkzeugwelle, also frontal vor der Werkzeugaufnahme, die den Staubführungsraum begrenzende Wand. Es ist also zweckmäßig, wenn frontal vor dem Bremskörper (in axialer Verlängerung der Werkzeugwelle gesehen) keine Führungswand der Staubführungseinrichtung angeordnet ist. Mithin ist also in Längsrichtung der Drehachse der Werkzeugwelle vor dem Bremskörper keine weitere Führungswand der Staubführungseinrichtung vorgesehen.

An dieser Stelle sei bemerkt, dass es zwar möglich ist, jedoch nicht unbedingt notwendig, dass sich zwischen dem Bremskörper und beispielsweise dem Führungskörper der Kantenfräsmaschine mindestens ein Staubeinlass des Staubauslasskanals erstreckt. Es ist also beispielsweise möglich, dass der Bremskörper beispielsweise zusammen mit einer seitlich neben ihm verlaufenden Führungswand der Staubführungseinrichtung sozusagen einen Einlasskanal in Richtung des Staubeinlasses begrenzt.

Die Stützrolle ist zweckmäßigerweise über ihren gesamten Querschnitt in Axialer Verlängerung der Drehachse der Werkzeugwelle nicht durch eine Wandfläche der Staubführungseinrichtung oder des Bremskörpers überdeckt. Bezüglich dieses Querschnitts steht sie also zumindest frei.

Erfindungsgemäß ist vorgesehen, dass die Staubführungseinrichtung gleichzeitig eine Führungseinrichtung oder Anlage-Einrichtung der Kantenfräsmaschine bildet. Anders als eine beispielsweise aus dünnen Kunststoffwänden bestehende Absaughaube, was im Stand der Technik üblich ist, kann eine derartige Staubführungseinrichtung-gleichzeitig zur Führung der Kantenfräsmaschine an dem Werkstück entlang dienen. Insbesondere ist diese Führungsfunktion dann gegeben, wenn an der Werkzeugaufnahme ein konventionelles Fräswerkzeug, also nicht unbedingt ein Kantenfräswerkzeug, angeordnet ist. Mit diesem Fräswerkzeug kann beispielsweise die Hauptseitenfläche oder die Nebenseitenfläche des Werkstücks bearbeitet werden.

Die mindestens eine Anlagefläche kann eine Führungswand für den Staub oder den Saugstrom bilden, muss es aber nicht. Beispielsweise kann die mindestens eine Anlagefläche eine Art Spoiler darstellen.

Die Staubführungseinrichtung weist also zweckmäßigerweise mindestens eine Anlagefläche für das Werkstück auf. Diese Anlagefläche ist insbesondere für eine Fräsbearbeitung eines an der Nebenseitenfläche des Werkstücks angeordneten Umleimerbands vorgesehen. Somit kann beispielsweise ein vor die Hauptseitenfläche des Werkstücks vorstehender Abschnitt des Umleimerbands bündig mit der Hauptseitenfläche gefräst werden. Aber auch die Hauptseitenfläche des Werkstücks selbst kann auf diesem Wege mit einem Fräswerkzeug, das an der Werkzeugaufnahme der Kantenfräsmaschine angeordnet ist, bearbeitet werden.

Die mindestens eine Anlagefläche der Staubführungseinrichtung umfasst zweckmäßigerweise mindestens eine zur Hauptanlagefläche nicht-rechtwinkelig schräge, z.B. spitz- oder stumpfwinkelige, Anlagefläche, die zur Anlage an einer schräg zur Hauptseitenfläche des Werkstücks angeordneten Nebenseitenfläche vorgesehen ist. Diese mindestens eine Anlagefläche kann auch gerundet sein oder in der Art eines Sattels ausgestaltet sein. Das Werkstück kann dann beispielsweise an der Hauptanlagefläche mit seiner flachen Hauptseitenfläche anliegen, während seine Schmalseite, an der beispielsweise schon ein Umleimerband angeordnet ist, an der vorgenannten schrägen Anlagefläche der Staubführungseinrichtung anliegt.

Eine andere, mit der vorgenannten Variante kombinierbare Ausführungsform sieht vor, dass die mindestens eine Anlagefläche mindestens eine zu der Hauptanlagefläche rechtwinkelige Anlagefläche umfasst, die zur Anlage an einer zu Hauptseitenfläche des Werkstücks rechtwinkeligen Nebenseitenfläche, an der auch ein Umleimerband angeordnet sein kann, vorgesehen ist.

Weiterhin ist es vorteilhaft, wenn im Bereich der Werkzeugaufnahme zwischen der Hauptanlagefläche und der Staubführungseinrichtung ein Kanal zur Aufnahme eines vor die Hauptseitenfläche des Werkstücks vorstehenden Umleimerbands vorgesehen ist. Die Staubführungseinrichtung weist zweckmäßigerweise mindestens eine diesen Kanal begrenzende Anlagefläche auf. Bei dieser kann es sich beispielsweise um die vorgenannte schräge Anlagefläche handeln.

Der Kanal ist vorzugsweise zur Werkzeugaufnahme hin sich verengend, beispielsweise trichterförmig. Zur Trichterform tragen beispielsweise die mindestens eine Anlagefläche der Staubführungseinrichtung und/oder eine Seitenkontur des Führungskörpers bei. Beispielsweise ist am Führungskörper eine Gleitplatte angeordnet, die im Bereich des Kanals sich trichterförmig zur Werkzeugaufnahme oder zum Fräswerkzeug hin verengt.

Beispielsweise erstrecken sich seitlich neben der Werkzeugaufnahme (und somit dem Fräswerkzeug) Anlageflächen zum Abstützen der Nebenseitenfläche des Werkstücks seitlich neben dem Fräswerkzeug. In Verlängerung zu diesen beiden Anlageflächen ist vorzugsweise mindestens eine zu den Anlageflächen winkelige Anlagefläche vorgesehen, die sozusagen eine trichterförmige Kontur des Kanals begrenzt.

Bevorzugt ist es, wenn auch die den Kanal begrenzende Anlagefläche zueinander winkelige Abschnitte aufweist, so dass das Werkstück in unterschiedlichen Winkelstellungen, beispielsweise in mindestens einer Schrägposition, durch eine Anlagefläche oder einen Abschnitt einer Anlagefläche der Staubführungseinrichtung abgestützt ist. Diese Schrägposition ist z.B. schräg bezüglich einer ersten Winkelposition, die parallel zu einer Achse ist, die durch die Anlageflächen der Staubführungseinrichtung begrenzt ist, die direkt seitlich neben der Werkzeugaufnahme oder dem Fräswerkzeug verlaufen.

Bevorzugt umfasst die Staubführungseinrichtung ein blockartiges Führungselement. Das Führungselement ist vorzugsweise ganz oder im Wesentlichen massiv. Das Führungselement kann eine der vorgenannten Anlageflächen aufweisen, muss es aber nicht. Das Führungselement kann aus einem transparenten Kunststoff bestehen. Es ist aber nicht unbedingt notwendig, dass dies der Fall ist. Mithin kann das Führungselement auch vollständig aus einem nicht transparenten Material, zum Beispiel aus einem gefärbten Kunststoff bestehen. Weil das Führungselement nicht in der Art einer Haube ausgestaltet ist, sondern sich im Prinzip in der Art eines Blockes und sich nahe bei der Werkzeugaufnahme und dem Fräswerkzeug befindet, behindert es die Sicht des Bedieners auf den Arbeitsraum nicht. Die blockförmige Gestalt hat auch den Vorteil, dass das Führungselement unempfindlich gegenüber Beschädigungen ist.

Der Bremskörper ist bezüglich der Drehachse der Werkzeugwelle an der Staubführungseinrichtung in mindestens zwei voneinander verschiedenen Längspositionen anhand von Fixiermitteln vorteilhaft verstellbar. Somit kann er die Stützrolle an unterschiedlichen Achspositionen bezogen auf die Drehachse abstützen.

Es können diese Fixiermittel oder weitere Fixiermittel vorgesehen sein, die es ermöglichen, dass der Bremskörper erfindungsgemäß bezüglich der Staubführungseinrichtung in einer Bremsstellung, in welcher er die Stützrolle abbremst, und einer Freigabestellung festlegbar ist, in welcher er von der Stützrolle beabstandet ist. Somit kann also der Bremskörper auch in eine Lösestellung verstellt werden, in welcher er nicht zur Werkzeugaufnahme vorsteht oder jedenfalls weniger weit. Diese Maßnahme ist insbesondere dann vorteilhaft, wenn an der Werkzeugaufnahme kein Kantenfräswerkzeug, sondern ein anderes Fräswerkzeug, beispielsweise zum Fräsen eines vor die Hauptseitenfläche vorstehenden Abschnitts des Umleimerbands, angeordnet ist.

Es ist möglich, dass der Bremskörper die Stützrolle stirnseitig abbremst. Besonders bevorzugt ist jedoch eine radiale Bremsung, gegebenenfalls in Kombination mit einem stirnseitigen Bremskontakt zwischen Bremskörper und Stützrolle.

Nachfolgend wird ein Ausführungsbeispiel der Erfindung anhand der Zeichnung erläutert. Es zeigen:
- Figur 1: eine perspektivische Schrägansicht einer erfindungsgemäßen Kantenfräsmaschine sowie eines Staubsaugers zu deren Absaugung,
- Figur 2: eine Ansicht auf die Kantenfräsmaschine gemäß Figur 1 von unten,
- Figur 3: eine Teil-Schnittdarstellung der Kantenfräsmaschine, etwa entlang einer Schnittlinie A-A in Figur 2,
- Figur 4: eine Seitenansicht der Kantenfräsmaschine gemäß der vorstehenden Figuren, bei der fräsenden Bearbeitung einer Werkstückkante,
- Figur 5: eine obere Teilansicht der Kantenfräsmaschine etwa Entsprechend Figur 4, jedoch bei der Bearbeitung einer Hauptseitenfläche des Werkstücks, wobei die Nebenseitenfläche zu Hauptseitenfläche rechtwinkelige ist, und
- Figur 6: die Detailansicht gemäß Figur 5, jedoch bei der Bearbeitung eines Werkstücks, dessen Nebenseitenfläche schräg winkelig zur Hauptseitenfläche ist.

Eine Kantenfräsmaschine 10 weist ein Gehäuse 11 auf, in welchem ein beispielsweise elektrischer Antriebsmotor 12 angeordnet ist. Mit einem Schalter 13 kann der Antriebsmotor 12 eingeschaltet oder ausgeschaltet werden. Gegebenenfalls kann auch die Drehzahl mit dem Schalter 13 verstellt werden. Der Antriebsmotor 12, der beispielsweise durch einen an Bord der Kantenfräsmaschine 10 angeordneten Akkumulator (nicht dargestellt) oder sonstigen Energiespeicher oder alternativ über ein Netzkabel mit elektrischer Energie versorgt wird, treibt eine Werkzeugwelle 14 direkt oder über ein Getriebe (nicht dargestellt) an. An der Werkzeugwelle 14 befindet sich eine Werkzeugaufnahme 15.

Die Kantenfräsmaschine 10 kann am Gehäuse 11, aber auch an einem Handgriffanordnung, beispielsweise an einem Handgriff 16, bequem ergriffen werden.

Der Antriebsmotor 12 ist an einer Oberseite 23 eines Führungskörpers 20 angeordnet. Der Führungskörper 20 ist plattenartig, umfasst also beispielsweise eine Führungsplatte 21. Die Unterseite 22 des Führungskörpers 20 dient zur Anlage an einem Werkstück 85, 185. Eine an der Unterseite 22 angeordnete Gleitplatte 30 weist eine Hauptanlagefläche 31 zur Anlage und/oder Führung an einer Hauptseitenfläche 88 des Werkstücks 85, 185 auf.

Das Werkstück 85, 185 ist beispielsweise plattenartig, umfasst also eine in der Zeichnung regelmäßig nur teilweise dargestellte Werkstückplatte. Neben der Hauptseitenfläche 88 erstreckt sich eine Nebenseitenfläche 86, 186 des Werkstücks 85, 185. Die Nebenseitenfläche 86, 186 ist beispielsweise eine Stirnseite, während die Hauptseitenfläche 88 eine sich über eine größere Fläche erstreckende Oberseitenfläche oder Unterseitenfläche des Werkstücks 85, 185 ist. Zwischen der Nebenseitenfläche 86, 186 und der Hauptseitenfläche 88 erstreckt sich eine Werkstückkante 89, 189. Die Hauptseitenfläche 88 und die Nebenseitenfläche 86 sind zueinander rechtwinkelig. Die Werkstückkante 89 schließt somit einen rechten Winkel ein. Die Hauptseitenfläche 88 und die Nebenseitenfläche 186 sind zueinander stumpfwinkelig, d.h. der Winkel der Werkstückkante 189 ist größer als 90°. Die Kantenfräsmaschine 10 ist jedoch zur fräsenden Bearbeitung beider Ausgestaltungen der Werkstückkanten 89, 189 sowie Werkstückkanten mit anderen, hier nicht dargestellten Winkelverhältnissen optimal geeignet.

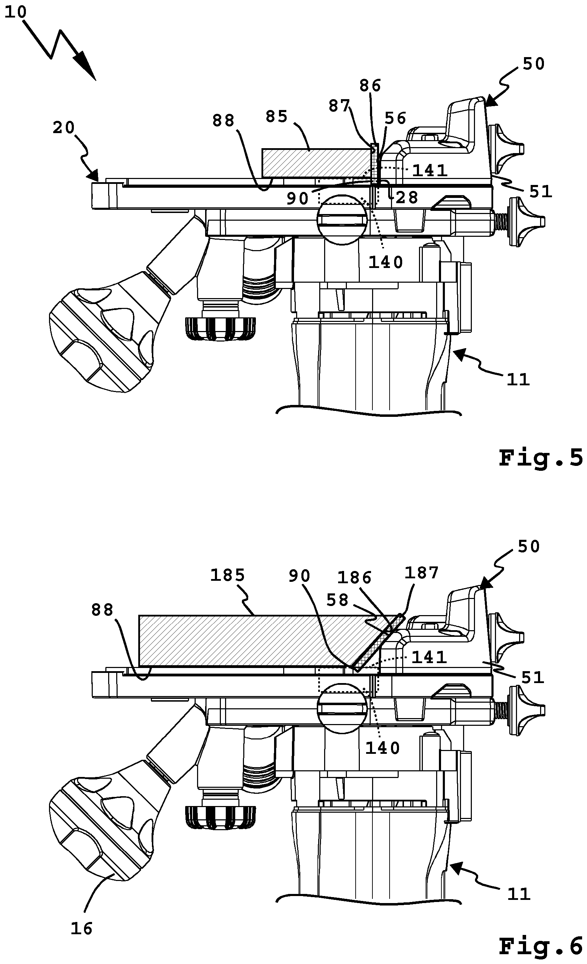

An den Nebenseitenflächen 86, 186 ist ein Umleimerband 87, 187 angeordnet, das im in Figur 5 oder 6 dargestellten Zustand noch einen vor die Hauptseitenfläche 88 vorstehenden Abschnitt 90 aufweist.

An der Oberseite 23 des Führungskörpers 20 ist ein Sauganschluss 24 zum Anschluss eines Saugschlauchs 81 eines Staubsaugers 80 vorgesehen.

Im Bereich einer Vorderseite 25 des Führungskörpers 20 befindet sich die Werkzeugwelle 14 und somit die Werkzeugaufnahme 15. Zwischen der Werkzeugaufnahme 15 und einer Rückseite 26 des Führungskörpers 20 erstreckt sich die Gleitplatte 30. Die Gleitplatte 30 liegt zweckmäßigerweise flächig mit der Hauptanlagefläche 31, vorzugsweise einer Gleitfläche, auf dem Werkstück 85, 185 auf, so dass ein an der Werkzeugaufnahme 15 angeordnetes Kantenfräswerkzeug 40 an der Werkstückkante 89, 189 entlang geführt werden kann, um diese abzufräsen, beispielsweise um eine gerundete Kontur zu fräsen.

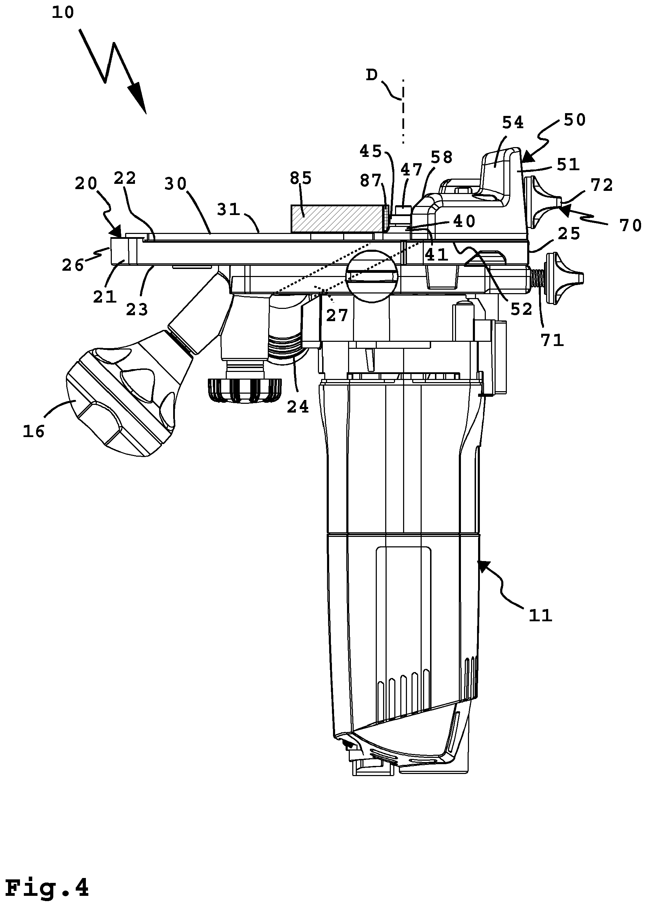

Eine Schneidfläche 41 des Kantenfräswerkzeug 40 ist beispielsweise konkav gerundet, so dass in das Umleimerband 87 entsprechend Figur 4 beispielsweise eine gerundete Kontur gefräst werden kann. Selbstverständlich könnte auch die Werkstückkante 89 direkt und nicht nur das ihr vorgelagerte Umleimerband 87 entsprechend durch das Kantenfräswerkzeug 40 bearbeitet werden. Neben der Schneidfläche 41 hat das Kantenfräswerkzeug 40 einen zylindrischen Außenumfang 42.

In axialer Verlängerung bezüglich der Drehachse D des Kantenfräswerkzeug 40 ist eine Stützrolle 45 an der Werkzeugwelle 14 drehbar gelagert, mit der die Werkzeugwelle 14 an der Nebenseitenfläche 86, 186, beispielsweise außen am Umleimerband 87, 187 oder unmittelbar am Werkstück 85, 185 (wenn kein Umleimerband vorgesehen ist) abgerollt werden kann. Die Stützrolle 45 stützt sich also seitlich neben der Hauptseitenfläche 88 an dem Werkstück 85, 185 ab, was eine exakte Fräsbearbeitung ermöglicht. Beispielsweise ist die Stützrolle 45 mittels einer Schraube 47 an der Werkzeugaufnahme 15 befestigt. Die Schraube 47 kann auch, muss aber nicht, zur Befestigung des Kantenfräswerkzeugs 40 an der Werkzeugaufnahme 15 dienen.

Damit die Stützrolle 45 jedoch nicht frei vom Drehmoment der Werkzeugwelle 14 antreibbar ist, also mit hoher Geschwindigkeit dreht, wenn sie an das Werkstück 85, 185 angesetzt wird, ist ein Bremskörper 65 vorgesehen, der sozusagen radial an der Stützrolle 45 angreift, nämlich am Außenumfang 46 der Stützrolle 45. Durch den Bremskörper 65 wird also die Stützrolle 45 so weit abgebremst, dass sie nur mit geringer Drehgeschwindigkeit oder ohne eigene Drehgeschwindigkeit selbst bei drehender Werkzeugwelle 14 an die Nebenseitenfläche 86, 186 herangeführt werden kann.

Es kann anstelle des Kantenfräswerkzeugs 40 aber auch ein nicht unbedingt zur Kantenbearbeitung vorgesehenes Fräswerkzeug 140 an der Werkzeugaufnahme 15 befestigt werden, zum Beispiel anhand einer Schraubverbindung. Das Fräswerkzeug 140 dient beispielsweise zur flächigen Bearbeitung der Hauptseitenfläche 88 der Werkstücke 85, 185, was in den Figuren 5 und 6 angedeutet ist. Eine Schneidfläche 141 des Fräswerkzeugs 140 befindet sich beispielsweise an dessen Stirnseite, in Verlängerung einer Drehachse D der Werkzeugwelle 14. Mit dem Fräswerkzeug 140 kann beispielsweise der vorstehende Abschnitt 90 des Umleimerbands 87, 187 mit der Hauptseitenfläche 88 bündig gefräst werden.

Nun kann sich vorstellen, dass bei der Fräsbearbeitung des Werkstücks 85, 185 erheblich Staub, Späne und dergleichen anfällt. Eine effektive Absaugung von Spänen und Staub bei der Werkstückbearbeitung stellt einen großen Vorteil dar.

Nun ist schon ein Vorteil dadurch erzielt, dass der Sauganschluss 24 an der Oberseite des Führungskörpers 20 angeordnet ist, somit also in der Nähe des Handgriffs 16 angeordnet ist, so dass die Kantenfräsmaschine 10 auch mit angeschlossenen Saugschlauch 81 leicht handhabbar ist. Eine einfache Variante einer Staubführungseinrichtung könnte beispielsweise vorsehen, dass sich um das Kantenfräswerkzeug 40 herum, jedenfalls im Bereich der Werkzeugaufnahme 15, eine relativ voluminöse Absaughaube vorgesehen ist, die mit dem Sauganschluss 24 kommuniziert.

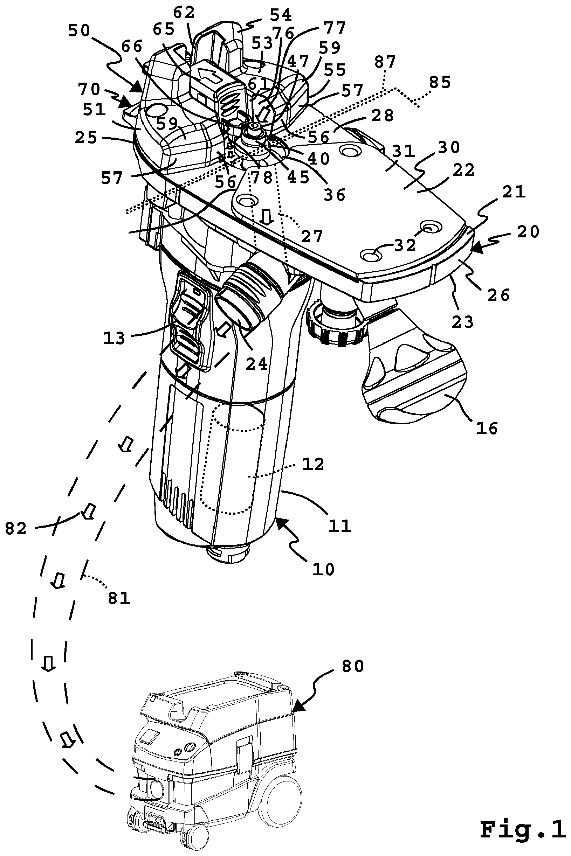

Eine bei der Kantenfräsmaschine 10 vorgesehene Staubführungseinrichtung 50 hingegen ist kompakt und blockartig, dennoch sehr effizient. Die Staubführungseinrichtung 50 stellt äußerst günstige Strömungsverhältnisse bereit, ohne dass dazu eine Absaughaube oder eine sonstige sperrige Einrichtung notwendig wäre. Der in Figur 1 mit einzelnen Pfeilen dargestellte Saugstrom 82, der zum Sauganschluss 24 führt, strömt mit hoher Geschwindigkeit am Kantenfräswerkzeug 40 und reißt dabei Staub, Späne und dergleichen anderes unerwünschtes Material mit, wobei dieses dann durch einen Staubauslasskanal 27, 127 zum Sauganschluss 24 strömt.

Die Staubführungseinrichtung 50 umfasst ein Führungselement 51, das mit einer Montageseite 52 an der Unterseite 22 des Führungskörpers 20 befestigt ist, beispielsweise anhand von Schrauben 60 angeschraubt.

Eine freie Seite oder Frontseite 53 des Führungselements 51 steht vor die Unterseite 22 des Führungskörpers 20 vor. Die Frontseite 53 und die Hauptanlagefläche 31 sind beispielsweise parallel oder im Wesentlichen parallel zueinander.

Die Gleitplatte 30 hat um die Werkzeugaufnahme 15 herum eine Aussparung 33. Die Aussparung 33 wird von einer runden Stirnseitenfläche 35 der Gleitplatte 30 begrenzt. An die Stirnseitenflächen 35 der Aussparung 33 schließen sich schräge Stirnseitenflächen 32 an, so dass zwischen dem Führungselement 51 und der Gleitplatte 30 ein Kanal 28 gebildet ist, der im Bereich der Werkzeugaufnahme 15 und somit im Bereich des Kantenfräswerkzeugs 40 seine geringste Breite hat, sich jedoch zu seinen freien Endbereichen hin, also seinen Einführseite hin, aufweitet. Insgesamt verengt sich der Kanal 28 zur Werkzeugaufnahme 15 hin. Die Werkzeugaufnahme 15 ist also beispielsweise zwischen zwei durch den Kanal 28 gebildeten Trichtern 29 angeordnet.

Der Kanal 28 bildet einen Aufnahmeraum für den vor die Hauptseitenfläche 88 vorstehenden Abschnitt 90 des Umleimerbands 87, 187, wenn die Hauptseitenfläche 88 des Werkstücks 85, 185 an der Hauptanlagefläche 31 des Führungskörpers 20 flach anliegt. Somit kann dieser Abschnitt 90 beispielsweise durch das Fräswerkzeug 140 abgefräst werden, nämlich anhand dessen stirnseitiger Schneidfläche 141.

Die Gleitplatte 30 ist beispielsweise mittels Schrauben 34 oder einer sonstigen Verbindungstechnik (Verkleben, Verrasten oder dergleichen) am Führungskörper 20 befestigt.

An dem Führungskörper 20 ist ein Staubeinlass 36 des Staubauslasskanals 27 vorgesehen. Der Staubeinlass 36 erstreckt sich ringförmig um die Werkzeugaufnahme 15 oder um das Kantenfräswerkzeug 40 herum. Durch das Kantenfräswerkzeug 40 erzeugter Staub, Späne oder dergleichen, wird also sozusagen direkt neben der Werkzeugwelle 14 abgesaugt, was den Arbeitsraum neben dem Kantenfräswerkzeug 40 frei hält und eine bequeme Handhabung der Maschine ermöglicht.

Der Gleitplatte 30 gegenüberliegend bildet das Führungselement 51 an einer Führungsseite 55 weitere Anlageflächen und Führungsflächen aus, an denen das Werkstück 85, 185 geführt werden kann. Beispielsweise kann das Werkstück 185 an Führungsflächen oder Anlageflächen 56, die sich seitlich neben die Führungswände 76 anschließen, mit seiner Nebenseitenfläche 186 oder dem Umleimerband 187 angelegt werden, siehe Figur 5.

Zudem sind am Führungselement 51 sich um die Werkzeugaufnahme 15 und die Werkzeugwelle 14 herum erstreckende Führungswände 76 vorgesehen, die zu einem Lenken eines Saugstroms in Richtung des Staubeinlasses 36 günstig beitragen. Die Führungswände 76 sind beispielsweise rund, ähnlich wie die Stirnseitenflächen 35 der Gleitplatte 30. Mithin ist also sozusagen eine Art Einführtrichter oder Einführkanal durch die Führungswände 76 und die Stirnseitenfläche 35 der Gleitplatte 30 gebildet, der den Saugstrom in Richtung des Staubeinlasses 36, also vom Kantenfräswerkzeug 40 oder Fräswerkzeug 140 weg, lenkt.

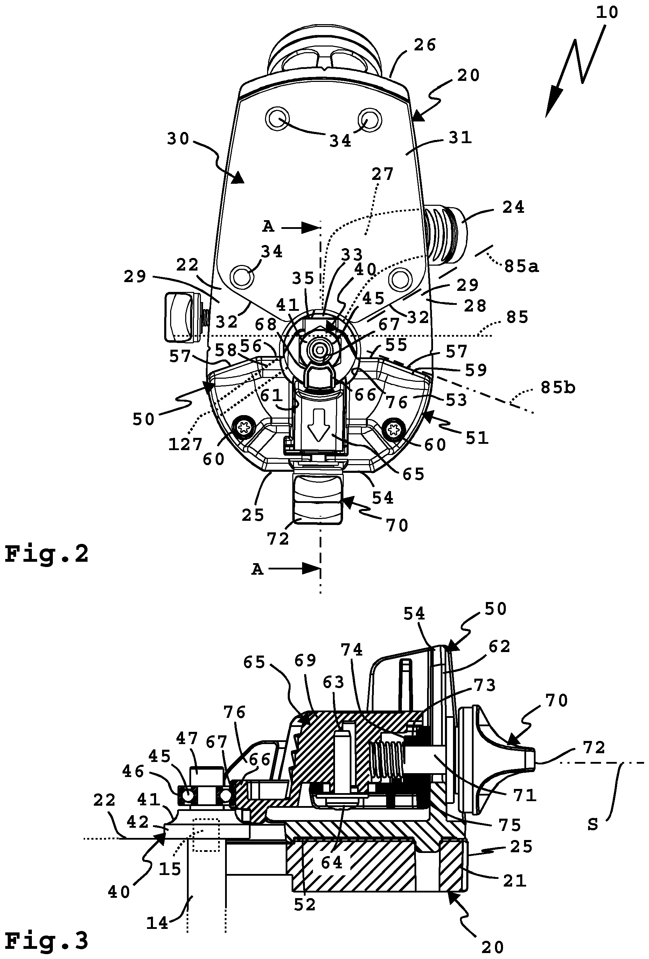

Zudem wird der Saugstrom durch den Bremskörper 65 und zumindest teilweise vorteilhaft durch die Stützrolle 45 geführt. Zwischen dem Bremsvorsprung 66 des Bremskörpers 65, der radial außen an der Stützrolle 45 in einen Bremseingriff gebracht werden kann, und den seitlich neben dem Bremsvorsprung 66 angeordneten Führungswänden 76 sind nämlich schmale Frischlufteinlässe 77 gebildet, die zusammen mit dem den Staubeinlass 36 zumindest teilweise überdeckenden Werkstück 85 (siehe insbesondere Figur 2) nur eine relativ begrenzte Frischluftzufuhr zulassen, also einen kleinen Strömungsquerschnitt zur Frischluftzufuhr bereitstellen. Die Frischluft strömt also an den Führungswänden 76 und Seitenwänden 68 des Bremsvorsprung 66 vorbei in Richtung eines Staubführungsraums 78, der im Bereich der Werkzeugaufnahme 15, jedenfalls auch des Kantenfräswerkzeugs 40 oder des Fräswerkzeugs 140 ausgebildet ist.

Frischluft kann also durch die Frischlufteinlässe 77 sowie am Werkstück 85 vorbei zusätzlich durch den Kanal 28 und an den Anlageflächen 56 in den Staubführungsraum 78 und von dort schließlich den Staubeinlass 36 strömen. Diese gesamten Einström-Querschnitte sind vorzugsweise nur unwesentlich größer (z.B. maximal 30-40 %), vorzugsweise jedoch gleich oder kleiner als ein Ausströmquerschnitt des Sauganschlusses 24.

Es entsteht dadurch, dass die Einströmung von Frischluft in den Staubführungsraum 78 begrenzt ist, eine Art Beschleunigungseffekt, d.h. durch das Kantenfräswerkzeug 40 erzeugter Staub, Späne und dergleichen, werden mit großer Strömungsgeschwindigkeit aus dem Staubführungsraum 78 und somit aus dem Bereich der Werkstückbearbeitung abgesaugt. Der Bediener sieht dadurch optimal zum Kantenfräswerkzeug 40, kann also die Kantenfräsmaschine 10 besonders günstig und ergonomisch führen. Die Werkstückbearbeitung ist dadurch verbessert und erleichtert.

Eine sperrige und die Sicht eines Bedieners behindernde Absaughaube ist nicht notwendig.

Der Bremskörper 65 begrenzt vorteilhaft den Staubführungsraum 78.

Man erkennt auch, dass allein schon durch die nahe bei dem Staubeinlasses 36 bzw. nahe bei der Werkzeugaufnahme 15 angeordneten Anlageflächen des Führungselements 51, nämlich insbesondere die Anlageflächen 56, sowie vorteilhaft zusätzlich das den Staubeinlass 36 teilweise verdeckende Werkstück 85 die Strömungsquerschnitte einströmseitig sehr klein sind, was eine hohe Strömungsgeschwindigkeit des Saugstroms im Bereich der Werkzeugaufnahme 15, jedenfalls des Kantenfräswerkzeugs 40 oder des Fräswerkzeugs 140, bewirkt. Der Bremskörper 65 trägt vorteilhaft zu der Verengung der einströmseitigen Strömungsquerschnitte bei, kann aber bei einer alternativen Ausgestaltung der somit dann eine eigenständige Erfindung darstellenden Staubführungseinrichtung 50 weggelassen sein oder jedenfalls nicht als "Luft-Führungsinstrument" dienen.

Ein vor einen Grundkörper 69 des Bremskörpers 65 vorstehender Bremsvorsprung 66 hat an seiner der Stützrolle 45 zugewandten Stirnseite eine Bremsfläche 67. Die Bremsfläche 67 ist vorzugsweise gerundet, entsprechend dem Außenumfang 46 der Stützrolle 45. Die Bremsfläche 67 kann weiterhin die Außenkontur des Kantenfräswerkzeug 40 aufnehmen, d.h. auch eine Bremsung beispielsweise im Bereich einer Stirnseite der Stützrolle 45 bewirken.

Das Führungselement 51 ist beispielsweise mittels Schrauben 60 an der Kantenfräsmaschine 10, z.B. deren Gehäuse 11 oder dem Führungskörper 20, lösbar befestigbar. Eine Verrastung, Verklebung oder dergleichen, beispielsweise auch eine Verklebung, der Staubführungseinrichtung 50 an dem Grundgerät der Kantenfräsmaschine 10 ist ohne weiteres auch möglich.

Entgegengesetzt zu der Frontseite 53 ist eine Wand 54 am Führungselement 51 vorgesehen, die eine Stützwand oder Haltewand für den Bremskörper 65 bildet.

Die Führungswände 76 erstrecken sich seitlich neben einer Führung 61 für den Bremskörper 65. An der Wand 54 ist ein Schlitz 62 vorgesehen, durch den hindurch sich eine Schraube 71 erstreckt. Mittels der Schraube 71 ist der Bremskörper 65 in der Führung 61 festlegbar. Die Schraube 71 bildet ein Fixierelement 70 zur Fixierung des Bremskörpers 65 bezüglich des Führungselements 51, jedenfalls eines Grundkörpers der Staubführungseinrichtung 50. Das Fixierelement 70 bildet einen Bestandteil von Fixiermitteln. Die Schraube 71 ist beispielsweise in eine Schraubaufnahme 73 des Bremskörpers 65 eingeschraubt. Beispielsweise ist die Schraubaufnahme 73 an einer Mutter 74 vorgesehen, die am Bremskörper 65 festgelegt ist oder vorzugsweise in unterschiedlichen Positionen bezüglich einer Stellachse S festlegbar ist.

Am Bremskörper 65 ist nämlich beispielsweise ein Haltekörper 75 in unterschiedlichen Längspositionen bezüglich der Stellachse S lösbar festlegbar, wobei der Haltekörper 75 die Mutter 74 ortsfest aufnimmt. Eine Schraube 64 ist nämlich durch den Haltekörper 75 hindurch in eine Aufnahme 63 des Bremskörpers 65 eingeschraubt. Wenn die Schraube 64 gelöst wird, kann der Haltekörper 75 und somit auch die Mutter 74 bezüglich des Bremskörpers 65 entlang der Stellachse S verstellt werden um anschließend wieder ortsfest fixiert zu werden, indem nämlich die Schraube 64 wieder angezogen wird. Unter dem Kopf der Schraube 64 ist vorzugsweise eine Unterlegscheibe vorgesehen, die sich am Haltekörper 75 abstützt.

Beispielsweise erstreckt sich der Schlitz 62 parallel zur Drehachse D, so dass der Bremskörper 65 in unterschiedlichen axialen Positionen parallel zur Drehachse D in der Aufnahme oder Führung 61 festgelegt werden kann. Wenn also beispielsweise anstelle der relativ schmalen Stützrolle 45 eine breitere Stützrolle verwendet wird oder die Axialposition der Stützrolle 45 bezüglich der Drehachse D eine andere ist, kann in der Bremskörper 65 an die jeweilige Position und/oder Breite der Stützrolle 45 angepasst bezüglich der Drehachse D in unterschiedlichen Positionen festgelegt werden.

Die Schraube 71 kann beispielsweise an einem Bedienkopf 72, zum Beispiel eine Art Knebel, betätigt werden. Die Wand 54 des Führungselements 51 befindet sich zwischen dem Bedienkopf 72 und dem Haltekörper 75, mithin also dem Bremskörper 65. Wenn also die Schraube 71 angezogen wird, klemmt sie die Wand 54 zwischen sich selbst und dem Haltekörper 75.

Wenn die Schraube 71 gelöst wird, ist der Bremskörper 65 entlang der Drehachse D verstellbar. Der Schlitz 62 ist an einem Längsende offen, so dass der Bremskörper 65 mit der in ihn eingeschraubten Schraube 71 aus dem Schlitz 62 entnommen werden kann, so dass die Staubführungseinrichtung 50 sozusagen ohne Bremsmittel oder Bremskörper 65 zur Bearbeitung des Werkstücks 185 gemäß Figuren 5 und 6 optimal geeignet ist. Der Bremskörper 65 ist dann nicht mehr im Weg.

Eine alternative Ausführungsform der Führung und Bewegung des Bremskörpers 65 an der Staubführungseinrichtung 50 könnte auch vorsehen, dass das Fixierelement 70 ein Stellelement bildet, d.h. dass es axial ortsfest beispielsweise am Führungselement 51 festgelegt ist, jedoch drehbar. Die Schraube 71 könnte in den Bremskörper 65 eingeschraubt werden oder aus ihm heraus geschraubt werden, so dass der Bremskörper 65 eine Axialbewegung entlang der Stellachse S durchmacht, somit also radial in Anlage mit der Stützrolle 45, eine Bremsstellung, oder außer Eingriff bzw. in einen Abstand zu der Stützrolle 45 gebracht werden kann, also in eine Freigabestellung. Der Bremskörper 65 kann also dann zwischen der Bremsstellung und der Freigabestellung bewegt werden.

Einen an sich eigenständigen Gedanken stellt es dar, dass die Staubführungseinrichtung 50 nicht nur effektiv zu einer Staubführung vom Kantenfräswerkzeug 40 weg geeignet ist, sondern auch zur Abstützung und Führung der Werkstücke 85 oder 185 bei weiteren Bearbeitungsschritten oder anderen Bearbeitungsschritten geeignet ist, wozu die Anlageflächen 56 sowie weitere, nachfolgend beschriebene Anlageflächen 57, 58, 59 vorgesehen sind. Der Beitrag des Bremskörpers 65 zur Staubführung ist in diesem Zusammenhang zwar als optimal anzusehen, jedoch nicht unbedingt notwendig. Insbesondere könnte die Staubführungseinrichtung 50 sogar vollständig ohne Bremseinrichtung, zumindest aber ohne den hier besonders günstig positionierten Bremskörper 65 zur nachfolgend beschriebenen Führung der Kantenfräsmaschine 10 am Werkstück 85, 185 entlang (oder des Werkstücks an der Kantenfräsmaschine entlang) günstig beitragen.

Die Anlageflächen 56 sind rechtwinkelig zu der Hauptanlagefläche 31. Sie eignen sich zu einer Werkstückbearbeitung gemäß Figur 5. Ein Werkstück, dessen Seitenflächen zueinander rechtwinkelig sind, nämlich das also eine Nebenseitenfläche 86 hat, die zur Hauptseitenfläche 88 rechtwinkelig ist, wie beim Werkstück 85 der Fall, kann flächig mit der Hauptseitenfläche 88 an der Hauptanlagefläche 31 anliegen und stirnseitig, nämlich mit der Nebenseitenfläche 86 oder dem daran angeordneten Umleimerband 87, an der Anlagefläche 56 anliegen. Man erkennt, dass auch hier eine optimale Führung des Saugstroms gewährleistet ist, der beispielsweise unter dem Werkstück 85 hindurch, im Wesentlichen jedoch durch die Führungsausnehmung des Führungselements 51, an den Führungswänden 76 vorbei, in den Staubführungsraum 78 einströmen kann. Staub wird effektiv abgesaugt.

Weitere zu der Hauptanlagefläche 31 rechtwinkelige Anlageflächen 57 ermöglichen eine Abstützung des Werkstücks 85 auch in Winkelpositionen, die in Figur 2 mit den Bezugsziffern 85a und 85b angedeutet sind, sozusagen in Gehrungspositionen. Auf diesem Wege lassen sich beispielsweise Eckbereiche optimal bearbeiten.

Weitere Abstützungsmöglichkeiten sind durch Anlageflächen 58 und 59 gegeben, die schräg zu den zu ihnen benachbarten Anlageflächen 56 und 57 verlaufen. Die Anlageflächen 58 und 59 ermöglichen eine seitliche Abstützung des Werkstücks 185, dessen Nebenseitenfläche 186 bzw. dessen Umleimerband 187 stumpfwinkelig zur Hauptseitenfläche 88 sind. Es ist möglich, dass die Anlageflächen 58 und 59 gerundet sind, so dass sie eine Abstützung von Werkstücken ermöglichen, die noch andere Winkelverhältnisse zwischen Nebenseitenfläche und Hauptseitenfläche haben wie das Werkstück 185.

Es ist zwar vorteilhaft, dass der Staubauslasskanal 27 durch den Führungskörper 20 hindurch verläuft. Es ist aber auch möglich, dass einer oder mehrere Staubauslasskanäle durch einen Körper der Staubführungseinrichtung, beispielsweise das Führungselement 51, verlaufen. Exemplarisch angedeutet ist ein Staubauslasskanal 127, der sich von der Werkzeugaufnahme 15 bzw. dem Kantenfräswerkzeug 40 weg nach radial außen zur Außenseite des Führungselements 51 erstreckt, siehe Figur 2. Am Ausgang des Staubauslasskanals 127 könnte ein Absauganschluss in der Art des Sauganschlusses 24 oder auch eine Steckaufnahme für einen Saugschlauch oder dergleichen vorgesehen sein. Jedenfalls kommuniziert der Staubauslasskanal 27 direkt mit dem Staubführungsraum 78.

## Patentansprüche

1. Kantenfräsmaschine (10) zum fräsenden Bearbeitung einer sich zwischen einer Hauptseitenfläche (88) und einer Nebenseitenfläche (86; 186) eines Werkstücks (85; 185) erstreckenden Werkstückkante (89; 189), insbesondere eines vor die Werkstückkante (28) (89; 189) vorstehenden Abschnitts (90) eines Umleimerbands (87; 187), wobei die Kantenfräsmaschine (10) einen insbesondere plattenartigen Führungskörper (20), der eine Hauptanlagefläche (31) zur Anlage an der Hauptseitenfläche (88) des Werkstücks (85; 185) aufweist, und einen Antriebsmotor (12) zum rotatorischen Antrieb einer Werkzeugwelle (14) aufweist, an der eine Werkzeugaufnahme (15) für ein Kantenfräswerkzeug (40) angeordnet ist und an deren freiem Endbereich eine bezüglich der Werkzeugwelle (14) drehbare Stützrolle (45) zur Abstützung an der Nebenseitenfläche (86; 186) angeordnet ist, wobei die Kantenfräse eine Bremseinrichtung mit einem Bremskörper (65) zum Abbremsen der Stützrolle (45) und eine Staubführungseinrichtung (50) zum Wegführen von Staub von der Werkzeugaufnahme (15) weg in Richtung eines Staubauslasskanals (27; 127) aufweist, wobei die Staubführungseinrichtung (50) mindestens eine Führungswand (76) zur Begrenzung eines sich um die Werkzeugaufnahme (15) erstreckenden Staubführungsraums (78) aufweist und mindestens ein Staubeinlass (36) des Staubauslasskanals (27; 127) in dem Staubführungsraum (78) angeordnet ist, wobei der mindestens eine Staubeinlass einen an dem Führungskörper (20) angeordneten Staubeinlass (36) umfasst, und dass die Staubführungseinrichtung (50) mindestens eine Anlagefläche für das Werkstück (85; 185) im Zusammenhang mit einer Fräsbearbeitung eines an der Nebenseitenfläche (86; 186) des Werkstücks (85; 185) angeordneten Umleimerbands (87; 187) aufweist, **dadurch gekennzeichnet, dass** der Bremskörper (65) anhand von Fixiermitteln bezüglich der Staubführungseinrichtung (50) in einer Bremsstellung, in welcher er die Stützrolle (45) abbremst, und einer Freigabestellung festlegbar ist, in welcher er von der Stützrolle (45) beabstandet ist.

2. Kantenfräsmaschine (10) nach Anspruch 1, **dadurch gekennzeichnet, dass** der Bremskörper (65) eine Begrenzungswand zur Begrenzung des Staubführungsraums (78) bildet.

3. Kantenfräsmaschine nach Anspruch 1 oder 2, **dadurch gekennzeichnet, dass** zwischen der mindestens einen Führungswand (76) der Staubführungseinrichtung (50) und dem Bremskörper (65) mindestens ein Frischlufteinlass (77) zum Zuströmen von frischer Umgebungsluft in den Staubführungsraum (78) gebildet ist.

4. Kantenfräsmaschine nach einem der vorhergehenden Ansprüche, **dadurch gekennzeichnet, dass** ein Staubauslass des Staubauslasskanals (27; 127) eine größere Strömungsquerschnittsfläche oder eine nur um maximal 30 % kleinere Strömungsquerschnittsfläche aufweist als die Summe sämtlicher Strömungsquerschnittflächen, die zum Zuströmen von frischer Umgebungsluft in den Staubführungsraum (78) vorhanden sind, wenn das Werkstück (85; 185) zur Bearbeitung durch das Kantenfräswerkzeug (40) an der Hauptanlagefläche (31) anliegt.

5. Kantenfräsmaschine nach einem der vorhergehenden Ansprüche, **dadurch gekennzeichnet, dass** der mindestens eine Staubeinlass (36) einen sich ringförmig oder teilringförmig um die Werkzeugaufnahme (15) erstreckenden Staubeinlass (36) und/oder einen an der mindestens eine Führungswand (76) der Staubführungseinrichtung (50) angeordneten Staubeinlass umfasst.

6. Kantenfräsmaschine nach einem der vorhergehenden Ansprüche, **dadurch gekennzeichnet, dass** die Hauptanlagefläche (31) an der Unterseite (22) des Führungskörpers (20) und ein insbesondere einen Sauganschluss (24) bildender Staubauslass des Staubauslasskanals (27; 127) an der Oberseite (23) des Führungskörpers (20) angeordnet sind.

7. Kantenfräsmaschine nach einem der vorhergehenden Ansprüche, **dadurch gekennzeichnet, dass** der Bremskörper (65) und/oder die Werkzeugaufnahme (15) und/oder die Stützrolle (45) zwischen den Staubführungsraum (78) seitlich, insbesondere trichterförmig, begrenzenden Führungswänden der Staubführungseinrichtung (50) angeordnet sind.

8. Kantenfräsmaschine nach einem der vorhergehenden Ansprüche, **dadurch gekennzeichnet, dass** die Hauptanlagefläche (31) und die Werkzeugaufnahme (15) derart positioniert sind, dass das an der Hauptanlagefläche (31) anliegende Werkstück (85; 185) in Zusammenwirkung mit der mindestens einen Führungswand (76) der Staubführungseinrichtung (50) und dem Bremskörper (65) den Staubführungsraum (78) begrenzt.

9. Kantenfräsmaschine nach einem der vorhergehenden Ansprüche, **dadurch gekennzeichnet, dass** der Bremskörper (65) eine Bodenwand des Staubführungsraums (78) bildet und/oder dass der Bremskörper (65) bezüglich des freien Endes der Werkzeugwelle (14) die den Staubführungsraum (78) begrenzende Wand darstellt

10. Kantenfräsmaschine nach einem der vorhergehenden Ansprüche, **dadurch gekennzeichnet, dass** die Stützrolle (45) über ihren gesamten Querschnitt in axialer Verlängerung der Drehachse (D) der Werkzeugwelle (14) nicht durch eine Wandfläche der Staubführungseinrichtung (50) oder des Bremskörpers (65) überdeckt ist oder frei steht.

11. Kantenfräsmaschine nach einem der vorhergehenden Ansprüche, **dadurch gekennzeichnet, dass** die mindestens eine Anlagefläche mindestens eine zur Hauptanlagefläche (31) nicht-rechtwinkelig schräge Anlagefläche zur Anlage an einer schräg zur Hauptseitenfläche (88) des Werkstücks (85; 185) angeordneten Nebenseitenfläche (86; 186) und/oder mindestens eine zu der Hauptanlagefläche (31) rechtwinkelige Anlagefläche zur Anlage an einer zu Hauptseitenfläche (88) des Werkstücks (85; 185) rechtwinkeligen Nebenseitenfläche (86; 186) und/oder mindestens eine zueinander winkelige Anlageflächen oder Anlageflächenabschnitte zur Anlage derselben Nebenseitenfläche (86; 186) des Werkstücks (85; 185) in zueinander winkeligen Positionen umfasst, wobei die Anlageflächenabschnitte bezüglich der Hauptanlagefläche (31) vorzugsweise rechtwinklig sind.

12. Kantenfräsmaschine nach einem der vorhergehenden Ansprüche, **dadurch gekennzeichnet, dass** im Bereich der Werkzeugaufnahme (15) zwischen der Hauptanlagefläche (31) und der Staubführungseinrichtung (50) ein sich insbesondere zu seinen Endbereichen trichterförmig weiter offener und sich zur Werkzeugaufnahme (15) hin verengender Kanal (28) zur Aufnahme eines vor die Hauptseitenfläche (88) des Werkstücks (85; 185) vorstehenden und an der Nebenseitenfläche (86; 186) des Werkstücks (85; 185) angeordneten Umleimerbands (87; 187) vorgesehen ist, wobei die Staubführungseinrichtung (50) mindestens eine den Kanal (28) begrenzende Anlagefläche aufweist.

13. Kantenfräsmaschine nach einem der vorhergehenden Ansprüche, **dadurch gekennzeichnet, dass** die Staubführungseinrichtung (50) ein blockartiges Führungselement (51) umfasst.

14. Kantenfräsmaschine nach einem der vorhergehenden Ansprüche, **dadurch gekennzeichnet, dass** der Bremskörper (65) anhand von Fixiermitteln bezüglich der Drehachse (D) der Werkzeugwelle (14) an der Staubführungseinrichtung (50) in mindestens zwei voneinander verschiedenen Längspositionen festlegbar ist und/oder dass Bremskörper (65) die Stützrolle (45) radial abbremst.

## Claims

1. Edge milling machine (10) for milling a workpiece edge (89; 189) extending between a main side surface (88) and a secondary side surface (86; 186) of a workpiece (85; 185), in particular a section (90) of an edge band (87; 187) protruding beyond the workpiece edge (28) (89; 189), wherein the edge milling machine (10) has a guide body (20), in particular plate-shaped, which has a main lay-on surface (31) for laying onto the main side surface (88) of the workpiece (85; 185), and a drive motor (12) for rotary driving of a tool shaft (14), on which a tool holder (15) for an edge milling tool (40) is mounted and at the free end section of which there is provided a support roller (45), rotatable relative to the tool shaft (14), for supporting the secondary side surface (86; 186), wherein the edge milling machine has a braking device with a braking body (65) for braking the support roller (45), and a dust guiding device (50) for removal of dust from the tool holder (15) towards a dust outlet passage (27; 127), wherein the dust guiding device (50) has at least one guide wall (76) to delimit a dust guide chamber (78) extending around the tool holder (15), and at least one dust inlet (36) of the dust outlet passage (27; 127) is located in the dust guide chamber (78), wherein the dust inlet or inlets includes or include a dust inlet (36) located on the guide body (20), and that the dust guiding device (50) has at least one lay-on surface for the workpiece (85; 185) in connection with milling of an edge band (87; 187) located on the secondary side surface (86; 186) of the workpiece (85; 185), **characterised in that** the braking body (65) may be fixed with the aid of fixing means relative to the dust guiding device (50) in a braking position in which it brakes the support roller (45), and a release position in which it has clearance from the support roller (45).

2. Edge milling machine (10) according to claim 1, **characterised in that** the braking body (65) forms a boundary wall to delimit the dust guide chamber (78).

3. Edge milling machine according to claim 1 or 2, **characterised in that** at least one fresh air intake (77) for the inflow of fresh outside air into the dust guide chamber (78) is formed between the guide wall or walls (76) of the dust guiding device (50) and the braking body (65).

4. Edge milling machine according to any of the preceding claims, **characterised in that** one dust outlet of the dust outlet passage (27; 127) has a greater flow cross-section area or a flow cross-section area only a maximum of 30% smaller than the sum of all flow cross-section areas available for the inflow of fresh outside air into the dust guide chamber (78), when the workpiece (85; 185) lies on the main lay-on surface (31) for machining by the edge milling tool (40).

5. Edge milling machine according to any of the preceding claims, **characterised in that** the dust inlet or inlets (36) include an annular or partly annular dust inlet (36) extending around the tool holder (15) and/or a dust inlet located on the guide wall or walls (76) of the dust guiding device (50).

6. Edge milling machine according to any of the preceding claims, **characterised in that** the main lay-on surface (31) is arranged on the underside (22) of the guide body (20), and a dust outlet of the dust outlet passage (27; 127) which in particular forms a suction port (24) is arranged on the upper side (23) of the guide body (20).

7. Edge milling machine according to any of the preceding claims, **characterised in that** the braking body (65) and/or the tool holder (15) and/or the support roller (45) are arranged between the guide walls of the dust guiding device (50) bounding the dust guide chamber (78) at the side, in particular in a funnel shape.

8. Edge milling machine according to any of the preceding claims, **characterised in that** the main lay-on surface (31) and the tool holder (15) are so positioned that the workpiece (85; 185) abutting the main lay-on surface (31) bounds the dust guide chamber (78) in conjunction with the guide wall or walls (76) of the dust guiding device (50) and the braking body (65).

9. Edge milling machine according to any of the preceding claims, **characterised in that** the braking body (65) forms a base of the dust guide chamber (78) and/or that the braking body (65) represents the wall bounding the dust guide chamber (78), relative to the free end of the tool shaft (14).

10. Edge milling machine according to any of the preceding claims, **characterised in that** the support roller (45), over its whole cross-section in an axial extension of the rotation axis (D) of the tool shaft (14), is not covered by a wall surface of the dust guiding device (50) or the braking body (65), or stands free.

11. Edge milling machine according to any of the preceding claims, **characterised in that** the lay-on surface or surfaces includes at least one inclined lay-on surface which is not perpendicular to the main lay-on surface (31), for contact with a secondary side surface (86; 186) arranged obliquely to the main side surface (88) of the workpiece (85; 185), and/or at least one lay-on surface perpendicular to the main lay-on surface (31) for contact with a secondary side surface (86; 186) perpendicular to the main side surface (88) of the workpiece (85; 185), and/or at least one lay-on surface or lay-on surface section at an angle to one another for contact with the same secondary side surface (86; 186) of the workpiece (85; 185) in positions at an angle to one another, wherein the lay-on surface sections are preferably perpendicular to the main lay-on surface (31).

12. Edge milling machine according to any of the preceding claims, **characterised in that** there is provided in the area of the tool holder (15) between the main lay-on surface (31) and the dust guiding device (50) a passage (28), in particular open wider towards its end sections on the manner of a funnel and tapering towards the tool holder (15), to accommodate an edge band (87; 187) protruding from the main side surface (88) of the workpiece (85; 185) and arranged at the secondary side surface (86; 186) of the workpiece (85; 185), wherein the dust guiding device (50) has at least one lay-on surface bordering the passage (28).

13. Edge milling machine according to any of the preceding claims, **characterised in that** the dust guiding device (50) includes a block-like guide element (51).

14. Edge milling machine according to any of the preceding claims, **characterised in that** the braking body (65) may be fixed with the aid of fixing means relative to the rotation axis (D) of the tool shaft (14) on the dust guiding device (50) in at least two longitudinal positions which differ from one another, and/or that the braking body (65) radially brakes the support roller (45).

## Revendications

1. Machine à fraiser les bords (10) servant à usiner par fraisage un bord de pièce (89 ; 189) s'étendant entre une surface latérale principale (88) et une surface latérale secondaire (86 ; 186) d'une pièce (85 ; 185), en particulier une section (90), faisant saillie du bord de pièce (89 ; 189), d'une bande de lisière (87 ; 187), dans laquelle la machine à fraiser les bords (10) présente un corps de guidage (20) en particulier de type plaque, lequel corps de guidage présente une surface d'appui principale (31) servant à venir en appui au niveau de la surface latérale principale (88) de la pièce (85; 185), et un moteur d'entraînement (12) servant à entraîner en rotation un arbre d'outil (14), au niveau duquel un logement d'outil (15) pour un outil de fraisage de bord (40) est disposé et au niveau de la zone d'extrémité libre duquel un galet de support (45) pouvant tourner par rapport à l'arbre d'outil (14), destiné à prendre appui au niveau de la surface latérale secondaire (86 ; 186) est disposé, dans laquelle la fraise de bord présente un dispositif de freinage pourvu d'un corps de freinage (65) servant à ralentir le galet de support (45) et un dispositif de guidage de poussière (50) servant à éloigner la poussière du logement d'outil (15) en direction d'un canal de sortie de poussière (27 ; 127), dans laquelle le dispositif de guidage de poussière (50) présente au moins une paroi de guidage (76) servant à délimiter un espace de guidage de poussière (78) s'étendant autour du logement d'outil (15) et au moins une entrée de poussière (36) du canal de sortie de poussière (27 ; 127) est disposée dans l'espace de guidage de poussière (78), dans laquelle l'au moins une entrée de poussière comprend une entrée de poussière (36) disposée au niveau du corps de guidage (20), et dans laquelle le dispositif de guidage de poussière (50) présente au moins une surface d'appui pour la pièce (85 ; 185) en rapport avec un usinage par fraisage d'une bande de lisière (87 ; 187) disposée au niveau de la surface latérale secondaire (86 ; 186) de la pièce (85 ; 185), **caractérisée en ce que** le corps de freinage (65) peut être immobilisé à l'aide de moyens de fixation par rapport au dispositif de guidage de poussière (50) dans une position de freinage, dans laquelle il ralentit le galet de support (45), et une position de déblocage, dans laquelle il est tenu à distance du galet de support (45).

2. Machine à fraiser les bords (10) selon la revendication 1, **caractérisée en ce que** le corps de freinage (65) forme une paroi de délimitation servant à délimiter l'espace de guidage de poussière (78).

3. Machine à fraiser les bords selon la revendication 1 ou 2, **caractérisée en ce qu'**au moins une entrée d'air frais (77) servant à amener un flux d'air extérieur frais dans l'espace de guidage de poussière (78) est formée entre l'au moins une paroi de guidage (76) du dispositif de guidage de poussière (50) et le corps de freinage (65).

4. Machine à fraiser les bords selon l'une quelconque des revendications précédentes, **caractérisée en ce qu'**une sortie de poussière du canal de sortie de poussière (27 ; 127) présente une surface de section transversale d'écoulement plus grande ou une surface de section transversale d'écoulement plus petite seulement de 30 % au maximum que la somme de toutes les surfaces de section transversale d'écoulement, qui sont présents afin d'amener un flux d'air extérieur frais dans l'espace de guidage de poussière (78) quand la pièce (85; 185) repose, aux fins de l'usinage par l'outil de fraisage de bord (40), au niveau de la surface d'appui principale (31).

5. Machine à fraiser les bords selon l'une quelconque des revendications précédentes, **caractérisée en ce que** l'au moins une entrée de poussière (36) comprend une entrée de poussière (36) s'étendant de manière à présenter une forme annulaire ou une forme partiellement annulaire autour du logement d'outil (15) et/ou une entrée de poussière disposée au niveau de l'au moins une paroi de guidage (76) du dispositif de guidage de poussière (50).

6. Machine à fraiser les bords selon l'une quelconque des revendications précédentes, **caractérisée en ce que** la surface d'appui principale (31) est disposée au niveau du côté inférieur (22) du corps de guidage (20) et une sortie de poussière, formant en particulier un raccord de poussière (24), du canal de sortie de poussière (27 ; 127) est disposée au niveau du côté supérieur (23) du corps de guidage (20).

7. Machine à fraiser les bords selon l'une quelconque des revendications précédentes, **caractérisée en ce que** le corps de freinage (65) et/ou le logement d'outil (15) et/ou le galet de support (45) sont disposés entre les parois de guidage, délimitant l'espace de guidage de poussière (78), latéralement, en particulier de manière à présenter une forme d'entonnoir, du dispositif de guidage de poussière (50).

8. Machine à fraiser les bords selon l'une quelconque des revendications précédentes, **caractérisée en ce que** la surface d'appui principale (31) et le logement d'outil (15) sont positionnés de telle manière que la pièce (85, 185) reposant au niveau de la surface d'appui principale (31) délimite l'espace de guidage de poussière (78) en coopération avec l'au moins une paroi de guidage (76) du dispositif de guidage de poussière (50) et le corps de freinage (65).

9. Machine à fraiser les bords selon l'une quelconque des revendications précédentes, **caractérisée en ce que** le corps de freinage (65) forme une paroi de fond de l'espace de guidage de poussière (78), et/ou que le corps de freinage (65) constitue, par rapport à l'extrémité libre de l'arbre d'outil (14), la paroi délimitant l'espace de guidage de poussière (78).

10. Machine à fraiser les bords selon l'une quelconque des revendications précédentes, **caractérisée en ce que** le galet de support (45) n'est pas recouvert, sur l'ensemble de sa section transversale, dans un prolongement axial de l'axe de rotation (D) de l'arbre d'outil (14), par une surface de paroi du dispositif de guidage de poussière (50) ou du corps de freinage (65) ou est dégagé.

11. Machine à fraiser les bords selon l'une quelconque des revendications précédentes, **caractérisée en ce que** l'au moins une surface d'appui comprend dans des positions angulaires les unes par rapport aux autres au moins une surface d'appui oblique non perpendiculaire par rapport à la surface d'appui principale (31), destinée à venir en appui au niveau d'une surface latérale secondaire (86 ; 186) disposée de manière oblique par rapport à la surface latérale principale (88) de la pièce (85 ; 185) et/ou au moins une surface d'appui perpendiculaire par rapport à la surface d'appui principale (31), destinée à venir en appui au niveau d'une surface latérale secondaire (86 ; 186) perpendiculaire par rapport à la surface latérale principale (88) de la pièce (85 ; 185) et/ou au moins des surfaces d'appui ou des sections de surface d'appui angulaires les unes par rapport aux autres, destinées à venir en appui à la même surface latérale secondaire (86; 186) de la pièce (85; 185), dans laquelle les sections de surface d'appui sont de préférence perpendiculaires par rapport à la surface d'appui principale (31).

12. Machine à fraiser les bords selon l'une quelconque des revendications précédentes, **caractérisée en ce qu'**est prévu, dans la zone du logement d'outil (15) entre la surface d'appui principale (31) et le dispositif de guidage de poussière (50), un canal (28) davantage ouvert de manière à présenter une forme d'entonnoir en particulier en direction de ses zones d'extrémité et se rétrécissant en direction du logement d'outil (15), servant à loger une bande de lisière (87 ; 187) faisant saillie de la surface latérale principale (88) de la pièce (85 ; 185) et disposée au niveau de la surface latérale secondaire (86 ; 186) de la pièce (85 ; 185), dans laquelle le dispositif de guidage de poussière (50) présente au moins une surface d'appui délimitant le canal (28).

13. Machine à fraiser les bords selon l'une quelconque des revendications précédentes, **caractérisée en ce que** le dispositif de guidage de poussière (50) comprend un élément de guidage (51) de type bloc.

14. Machine à fraiser les bords selon l'une quelconque des revendications précédentes, **caractérisée en ce que** le corps de freinage (65) peut être immobilisé à l'aide de moyens de fixation par rapport à l'axe de rotation (D) de l'arbre d'outil (14) au niveau du dispositif de guidage de poussière (50) dans au moins deux positions longitudinales différentes l'une de l'autre, et/ou que le corps de freinage (65) ralentit le galet de support (45) de manière radiale.
